# FASCICULE DE BREVET EUROPEEN

(11) **EP 2 768 635 B1**
(45) Date de publication et mention de la délivrance du brevet: **23.01.2019**
(21) Numéro de dépôt: 12772936.6
(22) Date de dépôt: 12.10.2012
(51) Int. Cl.: B25J 9/10, F16H 25/20, F16H 19/00, F16H 19/06

(54) **DISPOSITIF D'ANTI-ROTATION ASYMÉTRIQUE ET VÉRIN À VIS COMPORTANT UN TEL DISPOSITIF**
ASYMMETRISCHE DREHSICHERUNGSVORRICHTUNG UND SCHRAUBENWINDE MIT EINER SOLCHEN VORRICHTUNG
ASYMMETRICAL ANTI-ROTATION DEVICE AND SCREW JACK COMPRISING SUCH A DEVICE

(30) Priorité: 17.10.2011 FR 1159354
(43) Date de publication de la demande: 27.08.2014
(73) Titulaire: Commissariat à l'Énergie Atomique et aux Énergies Alternatives, 75015 Paris (FR)
(72) Inventeur: GARREC, Philippe, F-91190 GIF-SUR-YVETTE (FR)
(74) Mandataire: Parzy, Benjamin Alain
(86) Numéro de dépôt international: PCT/EP2012/070334
(87) Numéro de publication internationale: WO 2013/057058

(56) Documents cités:
- EP-A1- 0 315 310
- FR-A1- 2 941 760
- FR-A1- 2 949 451

## Description

### Domaine de l'invention

La présente invention concerne un dispositif d'anti-rotation d'un élément entraîné par un système d'entraînement linéaire autour d'un axe longitudinal d'entraînement. L'invention a également pour objet un vérin à vis et un vérin à câble comportant un tel dispositif.

### Etat de la technique

On connaît divers systèmes d'actionneurs linéaires à câbles. Les systèmes de type treuil sont constitués d'un tambour autour duquel vient s'enrouler un câble. Les systèmes à mouflage comprennent fréquemment un tambour motorisé qui, en agissant sur un moufle, réalise sur le câble de sortie du système, une démultiplication de l'effort de traction appliqué par le tambour. Enfin, les vérins à câble sont constitués d'un système d'entraînement d'une boucle de câble tendue entre deux poulies. L'objet auquel on souhaite communiquer le mouvement linéaire est fixé au câble entraîné ou à une autre boucle de câble mue par des poulies solidaires de celles supportant le câble entraîné. Le système de vérin à câble offre une bonne fidélité en effort, cela correspond à son aptitude à réaliser un mouvement donné dans un sens ou dans un autre en requièrant la même énergie quel que soit le sens du mouvement. Les vérins à câbles permettent également de disposer d'un moteur dont l'axe de rotation est parallèle à l'axe du câble entraîné. Ainsi, ce système réalise un renvoi d'angle performant au niveau énergétique (peu de pertes par frottement) et qui justifie son utilisation privilégiée en robotique notamment pour la réalisation des articulations de bras mécaniques.

Pour les applications dans lesquelles on souhaite économiser du poids, obtenir un retour de force précis ou éviter d'introduire des fluides, le vérin à câble est privilégié. Ce type de vérin est notamment utilisé pour des applications telles que la télé-opération, les orthèses ou les exosquelette.

Les vérins à câbles fonctionnent par entraînement longitudinal d'un élément solidaire d'un câble. L'entraînement est habituellement réalisé par un système vis-écrou. Un moteur est relié à l'écrou coopérant avec la vis qui constitue l'élément mené du système. L'axe d'entraînement de cette vis définit l'axe longitudinal du système. Une noix de guidage porte des moyens d'anti-rotation selon l'axe longitudinal de sorte que la rotation de l'écrou provoque une translation de la vis. Pour des raisons de compacité, la vis menée est généralement une vis creuse à l'intérieur de laquelle passe le câble entraîné. Afin de supprimer les vibrations internes au système, qui génèrent des frottements parasites et des mouvements de flexion sur la vis, un guidage linéaire selon l'axe longitudinal est assuré par la noix de guidage qui la guide. La liaison entre la noix de guidage et la vis est effectuée par un organe d'accouplement.

Ainsi la noix de guidage assure une liaison glissière suivant l'axe longitudinal d'entraînement. Les rotations suivant des axes perpendiculaires à l'axe longitudinale et perpendiculaires entre eux ainsi que les translations suivant ces mêmes axes doivent être autorisées par le système de guidage afin de ne pas être génératrices de vibrations.

Les fonctions d'accouplement de la vis à la noix de guidage, de guidage en translation et d'anti-rotation sont fréquemment regroupées au sein d'un même ensemble cinématique désigné sous le terme « chariot ». Le chariot comporte un bâti auquel sont raccordés les divers éléments Les solutions connues de guidage mettent généralement en oeuvre des systèmes de galets roulants destinés à guider longitudinalement la noix de guidage dans un bâti solidaire du système vis-écrou. Les galets coopèrent avec des rainures longitudinales réalisées dans le bâti et qui s'étendent de part et d'autre de l'axe d'entraînement de la vis. Ces rainures assurent à la fois une fonction de guidage en translation suivant l'axe longitudinal et une fonction d'anti-rotation selon l'axe longitudinal. Elles laissent également au chariot une liberté en translation selon un axe perpendiculaire au plan des rainures de guidage. On obtient alors un guidage linéaire bloquant une rotation de la vis selon son axe longitudinal, guidant la vis suivant l'axe longitudinal et autorisant un déplacement selon un axe perpendiculaire au plan des rainures de guidage. Le chariot comprend également un organe d'accouplement reliant la vis d'entraînement à la noix de guidage. L'accouplement peut être du type « ½ Oldham » ou « à soufflet ». Afin de limiter les vibrations au sein du système, il est important de laisser libre les déplacements de la vis relativement au chariot suivant un axe parallèle au plan des rainures de guidage et perpendiculaire à l'axe longitudinal. Une solution connue consiste à lier l'organe d'accouplement au bâti chariot par une liaison autorisant cette translation. Pour sa réalisation pratique, cette solution met en oeuvre deux arbres concourants à l'axe longitudinal et implantés de part et d'autre de l'organe d'accouplement. Les exigences de miniaturisation et d'encombrement des mécanismes interdisent l'utilisation de deux ensembles usinés standards, du type arbre cannelé par exemple, autorisant une translation et bloquant une rotation. Les réalisations connues mettent alors en oeuvre des arbres courts et lisses difficiles à aligner et donc pourvus de jeu de fonctionnement importants afin de permettre un coulissement satisfaisant. Ce faisant, la rotation de l'accouplement autour d'un axe parallèle au plan des rainures de guidage et perpendiculaire à l'axe longitudinal n'est pas bloquée. De plus, ces systèmes sont volumineux et les jeux de fonctionnement nécessaires introduisent des vibrations parasites importantes en regard de la précision attendue pour les applications d'exosquelette, d'orthèse ou de télé opération par exemple. Une autre solution consiste à articuler le bâti portant les rainures de guidage autour d'un axe perpendiculaire à l'axe d'entraînement. Cette solution ne permet cependant pas de réduire l'encombrement global du mécanisme, et crée une importante masse oscillante susceptible de générer des vibrations, des résonances et du bruit. Ainsi, les solutions connues impliquent des mécanismes avec des masses mobiles importantes ou des jeux de fonctionnements incompatibles avec les applications pour lesquelles une précision fine est recherchée. De plus, la fonction de coulissement de la noix de guidage par rapport au bâti est assurée par des pièces non standardisées qui pèsent sur les coûts de fabrication.

Le document FR 2 949 451 A1, est considéré comme l'état de la technique le plus proche et divulgue toutes les caractéristiques du préambule de la revendication 1.

### Objet de l'invention

Un but de l'invention est d'améliorer le fonctionnement de la noix de guidage et de réduire l'encombrement par rapport aux solutions connues.

### Exposé de l'invention

A cet effet, on prévoit, un dispositif d'anti-rotation d'un élément entraîné autour d'un axe longitudinal tout en laissant libre la translation de l'élément entraîné selon cet axe, le dispositif comprenant :
- une noix guidée par un guidage plan selon un plan longitudinal parallèle à l'axe longitudinal de la vis par des moyens de guidage qui bloquent une rotation de la noix de guidage autour de l'axe longitudinal et laissent libre une rotation de la noix de guidage autour de deux axes perpendiculaires à l'axe longitudinal et perpendiculaires entre eux ;
- un organe d'accouplement à une extrémité de l'élément entraîné, l'organe d'accouplement étant relié à la noix de guidage par des moyens de liaison qui autorisent une liaison à coulissement selon un axe de coulissement sensiblement perpendiculaire à l'axe longitudinal.

Dans un tel dispositif, on prévoit que l'axe de coulissement entre l'organe d'accouplement et la noix de guidage soit non concourant avec l'axe longitudinal.

Cette solution permet de réaliser la liaison à coulissement entre la noix de guidage et l'accouplement par un arbre monobloc autorisant la mise en oeuvre de solutions standardisées plus économiques et résultant en des jeux de fonctionnement plus faibles. Cette solution permet également d'introduire une liaison qui bloque la rotation de l'accouplement autour d'un axe parallèle au plan des rainures de guidage et perpendiculaire à l'axe longitudinal Cette liaison pourra avantageusement être réalisée par un arbre cannelé à recirculation de billes encastré en ses deux extrémités au châssis de la noix de guidage. En effet, ce type d'arbre standardisé autorise des jeux de fonctionnement faibles. De plus, en supprimant la liberté en rotation, on évite le risque de braquage intempestif de la noix et les contacts aléatoires indésirables entre pièces.

Un vérin à vis comportant ce dispositif verra les vibrations de la vis menée réduites, le coût de réalisation amélioré et son encombrement réduit. Les mêmes avantages s'appliquent au vérin à câble construit à partir de ce vérin à vis.

D'autres caractéristiques et avantages de l'invention ressortiront à la lecture de la description qui suit de modes de réalisation particuliers non limitatifs de l'invention.

### Brève description des figures

Il sera fait référence aux figures annexées, parmi lesquelles :
- la figure 1 est une vue partielle en perspective d'un vérin à câble comportant un dispositif d'anti-rotation conforme à l'invention ;
- la figure 2 est un schéma cinématique correspondant au mode de réalisation de la figure 1 ;
- les figures 3 à 6 représentent les schémas cinématiques d'une coupe transversale du dispositif d'anti-rotation conforme à l'invention selon différents modes de réalisation possibles.

### Description détaillée d'au moins un mode de réalisation de l'invention

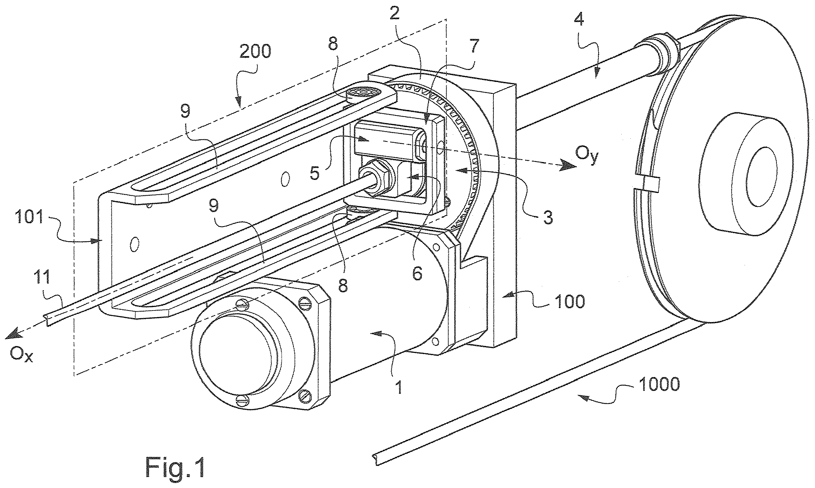

En référence à la figure 1, le dispositif d'anti-rotation conforme à l'invention est incorporé à un vérin à câble 1000. Celui-ci comprend un moteur 1 entraînant une courroie crantée 2 qui met en rotation un écrou menant 3. Le moteur 1 et l'écrou menant 3 sont montés sur un bâti 100. L'écrou menant 3 coopère avec une vis creuse 4 au travers de laquelle passe un câble 11 fixé à la vis creuse 4. Celle-ci s'étend, ici, selon un axe longitudinal d'entraînement Ox. Elle est bloquée en rotation autour de cet axe par un dispositif d'anti-rotation 200 constitué d'une noix de guidage 7 de forme sensiblement carrée pourvue d'une paire de galets 8 localisés de part et d'autre de la noix de guidage 7 et roulant dans deux rainures de guidage oblongues 9. Les rainures oblongues 9 sont réalisées dans les ailes d'une platine 101, ici en forme de U. La platine 101 est rigidement fixée au bâti 100 parallèlement à l'axe longitudinal Ox. La noix de guidage 7 comprend un organe d'accouplement 6 à la vis creuse 4, ledit organe d'accouplement étant lié à coulissement selon un axe perpendiculaire à l'axe longitudinal Ox et parallèle au plan des rainures de guidage par une douille 12 coulissant le long d'un arbre 5 . Selon un mode de réalisation préférentiel de l'invention, l'arbre 5 est un arbre cannelé à recirculation de billes.

Ainsi, une rotation du moteur 1 entraîne en rotation l'écrou menant 3, via la courroie crantée 2, et provoque la translation de la vis creuse 4 suivant l'axe longitudinal Ox car sa rotation selon ce même axe est bloquée par le dispositif d'anti-rotation 200. Le mouvement du câble 11 solidaire de la vis creuse 4 est exploité pour déplacer finement l'objet auquel on souhaite transmettre un mouvement.

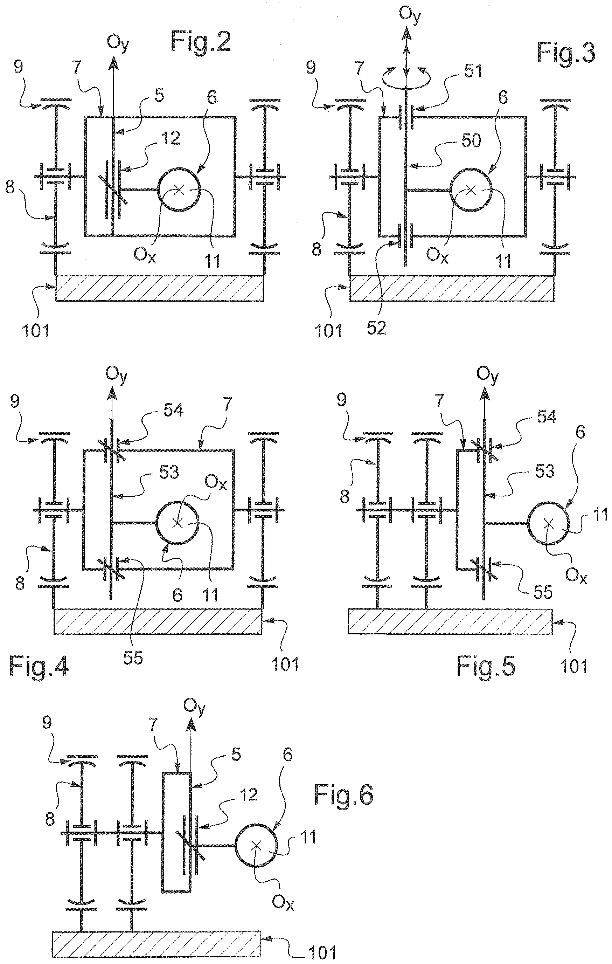

En référence à la figure 2, on revient plus en détail sur le fonctionnement du dispositif d'anti-rotation 200. Dans ce mode de réalisation particulier, les galets 8 sont situés de part et d'autre de la noix de guidage 7 et roulent dans des rainures de guidage 9. Ces rainures assurent une fonction d'anti-rotation autour de l'axe Ox. Le guidage ainsi réalisé est un guidage plan, les contacts entre les galets de guidage 8 et leurs rainures 9 autorisant des déplacements selon une direction perpendiculaire à l'axe longitudinal Ox et parallèle aux axes de rotation des galets 8. Le plan de guidage selon lequel est effectué le guidage plan de la noix est donc parallèle à l'axe longitudinal de la vis. Le coulissement relatif des galets dans leur rainures laisse libre un degré liberté en rotation suivant un axe Oy perpendiculaire à l'axe longitudinal Ox et parallèle au plan des rainures de guidage 9 ainsi qu'un déplacement de la noix de guidage selon une direction perpendiculaire au plan des rainures de guidage 9.

L'arbre cannelé à recirculation de billes 5 est rigidement lié à la noix de guidage 7 et réalise une liaison coulissante suivant la direction Oy entre la noix de guidage 7 et l'organe d'accouplement 6 solidaire de la douille 12 coulissant le long de l'arbre 5. Celui-ci est localisé à proximité de l'organe d'accouplement 6 de manière à ce que son axe de coulissement Oy soit non concourant avec l'axe longitudinal Ox. Les cannelures de l'arbre 5 bloquent la rotation de l'organe d'accouplement 6 (et donc de la vis creuse 4 dont il est solidaire) autour de l'axe Oy relativement au bâti 101. La liaison à glissement est alors une liaison glissière. La suppression de ce degré de liberté redondant permet d'éviter le risque de braquage intempestif de la noix et les contacts aléatoires indésirables entre pièces.

L'utilisation d'un arbre cannelé à recirculation de billes 5, dont le faible jeu de fonctionnement, voire l'absence de jeu en cas de précharge du mécanisme, est connu, améliore la précision de l'ensemble du dispositif d'anti-rotation 200 et du vérin 1000 qu'il équipe. La possibilité de mettre en oeuvre un élément de coulissement en une seule pièce élimine les problèmes d'alignement de l'art antérieur. Les arbres cannelés à recirculation de billes sont des pièces manufacturées standards. Le remplacement de pièces usinées sur mesure par de telles pièces manufacturées dans la fabrication de vérins à câble 1000 permet de réduire les coûts de production de ces derniers tout en en améliorant la qualité.

Les éléments identiques ou analogues à ceux précédemment décrits porteront une référence identique à ceux-ci dans la description qui suit des 4 autres modes de réalisation.

Dans un autre mode de réalisation du dispositif d'anti-rotation 200 décrit en figure 3, la liaison à coulissement est une liaison pivot glissant assurée, par exemple, par un arbre lisse 50 coopérant avec deux douilles 51 et 52 solidaires de la noix de guidage. Cette liaison autorise une rotation selon l'axe Oy et correspond donc à une liaison à coulissement de type pivot glissant. Les autres fonctions du dispositif d'anti-rotation 200 sont assurées selon des moyens identiques à ceux du mode de réalisation précédent décrit en rapport avec les figures 1 et 2. Ce second mode de réalisation permet de réduire les jeux de fonctionnement par l'utilisation d'un unique arbre 50 pour assurer la liaison à coulissement -sous forme d'une liaison pivot glissant- de l'accouplement 4 relativement au châssis 100. Cet arbre 50 est bien moins onéreux qu'un arbre à recirculation de billes de gabarit identique et permet de proposer un produit de coût réduit lorsque les effets de la subsistance d'une rotation selon l'axe Oy sont peu impactants.

Dans un troisième mode de réalisation décrit en figure 4, la liaison à coulissement est, comme dans le premier mode de réalisation de l'invention, une liaison glissière n'autorisant pas de rotation selon Oy. Alors que le premier mode de réalisation réalisait cette liaison par le coulissement d'une douille 12 solidaire de l'accouplement 6 et montée mobile sur un arbre 5, le présent mode de réalisation réalise la même liaison glissière par le coulissement d'un arbre 53 dans deux douilles 54 et 55, tout en en empêchant la rotation. Les autres fonctions du dispositif d'anti-rotation 200 sont assurées selon des moyens identiques à ceux du premier mode de réalisation décrit en rapport avec les figures 1 et 2. Un liaison comme celle représentée sur le schéma cinématique de la figure 4 peut être réalisée par un arbre 53 muni d'une rainure coopérant avec un doigt solidaire des douilles 54 et 55. Ce mode de réalisation offre des solutions économiques dans le cas de câbles de fort diamètre car les parties à usiner sont alors limitées à deux zones de longueur égale au débattement maximal de la vis plutôt qu'à la longueur complète de l'arbre 53.

Dans un quatrième mode de réalisation décrit en figure 5, les fonctions de guidage longitudinal et d'anti-rotation de la noix de guidage 7 sont assurés par deux galets 8 roulants dans des rainures longitudinales 9 localisées toutes les deux sur un même côté de la noix de guidage 7. Les autres fonctions de la noix de guidage 7 sont assurées selon des moyens identiques à ceux du troisième mode de réalisation décrit en rapport avec la figure 4. La liaison glissière est réalisée par le coulissement d'un arbre 53 dans deux douilles 54 et 55, tout en en empêchant la rotation. Ce mode de réalisation de la liaison glissière offre une solution économique pour l'entrainement des câbles de fort diamètre.

Le positionnement des deux galets de guidage 8 dans des rainures de guidage 9 situées sur un même côté de la noix de guidage 7 permet de disposer d'encombrement moindre ou de pouvoir éloigner le câble soit des galets soit de l'élément auquel on cherche à transmettre le mouvement afin, par exemple d'éviter une contamination d'un des éléments par l'autre (graisse, poussières, copeaux, etc...) ou de faciliter le remplacement ou la maintenance d'un des mécanismes.

Enfin, dans un cinquième mode de réalisation décrit en figure 6, les fonctions de guidage longitudinal et d'anti-rotation de la noix de guidage 7 sont assurés par deux galets 8 roulants dans des rainures longitudinales 9 localisées toutes les deux sur un même côté de la noix de guidage 7. Les autres fonctions de la noix de guidage 7 sont assurées selon des moyens identiques à ceux du premier mode de réalisation décrit en rapport avec la figure 2. Cette solution combine les avantages des premiers et troisième modes de réalisation et procure ainsi une compacité des moyens de guidage et d'anti-rotation ainsi que la mise en oeuvre d'un élément unique standardisé sous la forme de l'ensemble arbre cannelé 5 et douille 12.

Bien entendu, l'invention n'est pas limitée aux modes de réalisation décrits mais englobe toute variante entrant dans le champ de l'invention telle que définie par les revendications.

En particulier,
- bien que la transmission du mouvement du moteur 1 vers l'écrou menant 3 soit effectuée par une courroie crantée 2, l'invention s'applique également à d'autres moyens de transmission du mouvement tel que une transmission par engrenage, par courroie lisse, un entraînement direct ;
- bien que l'élément menant 3 soit ,ici, un écrou et l'élément mené 4 une vis, l'invention s'applique également à une cinématique inversée comportant une vis menante et un écrou mené ;
- bien que le vérin à vis soit, ici, couplé à un câble 11, l'invention s'applique également à l'entraînement d'autres éléments tels que, par exemple, une tige rigide ou une came;
- bien que le câble entraîné 11 soit, ici, lié à la vis 4 en son milieu, l'invention s'applique à d'autres modes de fixation du câble 11 comme par exemple à l'une des extrémités de la vis 4 ;
- bien qu'ici, la vis menée 4 soit creuse, l'invention s'applique également au cas d'une vis pleine ;
- bien qu'ici, les axes de rotation des deux galets 8 soient parallèles entre eux et concourant à l axe longitudinal Ox, l'invention s'applique également à des axes de rotations des galets 8 quelconque ou non concourants avec l'axe longitudinal Ox comme par exemple des galets 8 placés dans des rainures 9 dont les plans sont orthogonaux ou selon toute autre orientation;
- bien qu'ici les moyens de guidage et d'anti-rotation soient des galets de guidages 8, l'invention s'applique également à d'autres moyens de guidage et d'anti-rotation tels que, par exemple, des glissières ponctuelles coulissant le long d'arbres parallèles à l'axe longitudinal Ox, des rouleaux roulants dans des rainures, des liaisons magnétiques;
- bien qu'ici les moyens de guidage et d'anti-rotation soient réalisés par un moyen unique sous la forme de galets de guidages 8 dans des rainures longitudinales 9, l'invention s'applique également des réalisations dans lesquelles les moyens de guidage et l'anti-rotation sont assurés par deux organes distincts tels que par exemple, un rail de guidage suivant l'axe longitudinal couplé avec un appui plan ;
- bien que les moyens de guidage et d'anti-rotation soient, ici, deux galets 8, l'invention s'applique également à un unique rouleau ou a une pluralité de galets.

## Revendications

1. Dispositif d'anti-rotation d'un élément mené (4) autour d'un axe longitudinal (Ox) tout en laissant libre la translation de l'élément entraîné selon cet axe, le dispositif comprenant :
- une noix (7) guidée par un guidage plan selon un plan longitudinal parallèle à l'axe longitudinal de l'élément mené par des moyens de guidage (8) qui bloquent une rotation de la noix de guidage (7) autour de l'axe longitudinal et laissent libre les rotations de la noix de guidage (7) autour de deux axes perpendiculaires à l'axe longitudinal et perpendiculaires entre eux ;
- un organe d'accouplement (6) à une extrémité de l'élément mené (4), l'organe d'accouplement (6) étant relié à la noix de guidage (7) par des moyens de liaison qui autorisent une liaison à coulissement (5) selon un axe de coulissement sensiblement perpendiculaire à l'axe longitudinal ;
**caractérisé en ce que** l'axe de coulissement (5) est non concourant avec l'axe longitudinal.

2. Dispositif selon revendication 1, dans lequel les moyens de liaison autorisent une rotation selon l'axe de coulissement.

3. Dispositif selon revendication 1, dans lequel les moyens de liaison comprennent un arbre cannelé à recirculation de billes (5).

4. Dispositif selon revendication 1, dans lequel les moyens de guidage (8) comprennent au moins un galet solidaire de la noix de guidage (7) et roulant dans une rainure (9).

5. Dispositif selon revendication 1, dans lequel les moyens de guidage comportent un chariot à galets (8) roulant chacun dans une rainure (9) associée, l'organe d'accouplement reliant le chariot à l'élément mené (4) par une liaison glissière (5) d'axe orthogonal à l'axe des galets (8).

6. Dispositif selon revendication 5, dans lequel les deux rainures (9) sont situées de part et d'autre du chariot à galets.

7. Dispositif selon revendication 5, dans lequel les deux rainures (9) sont situées d'un même côté du chariot à galets.

8. Vérin à vis comprenant une vis (4) menée selon son axe longitudinal au moyen d'un écrou d'entraînement (3), la vis menée (4) étant associée à un dispositif d'anti-rotation conforme à l'une des revendications précédentes.

9. Vérin à câble comprenant un vérin à vis selon la revendication 8, dont la vis menée (4) est solidaire du câble (11).

10. Vérin à câble selon la revendication 9, dans lequel la vis menée (4) est une vis creuse, le câble (11) étant solidaire de la vis (4) et passant à travers celle-ci.

## Patentansprüche

1. Antirotationsvorrichtung für ein um eine Längsachse (Ox) angetriebenes Element (4), während die Translationsbewegung des angetriebenen Elements entlang dieser Achse zugelassen wird, wobei die Vorrichtung umfasst:
eine Führungsnuss (7), die durch eine flache Führung in einer Längsebene, die parallel zur Längsachse des angetriebenen Elements ist, mittels Führungsmitteln (8) geführt wird, die eine Drehung der Führungsnuss (7) um die Längsachse blockieren und die Drehungen der Führungsnuss (7) um zwei Achsen, die senkrecht zur Längsachse und senkrecht zueinander sind, zulassen,
- ein Kopplungselement (6) zur Kopplung mit einem Ende des angetriebenen Elements (4), wobei das Kopplungselement (6) mit der Führungsnuss (7) über Verbindungsmittel verbunden ist, die eine Gleitverbindung (5) gemäß einer Verschiebungsachse gestatten, die im Wesentlichen senkrecht zur Längsachse ist;
**dadurch gekennzeichnet, dass** sich die Verschiebungsachse (5) nicht mit der Längsachse schneidet.

2. Vorrichtung nach Anspruch 1, bei der die Verbindungsmittel eine Drehung um die Verschiebungsachse gestatten.

3. Vorrichtung nach Anspruch 1, bei der die Verbindungsmittel eine Keilwelle (5) mit Kugelrückführung umfassen.

4. Vorrichtung nach Anspruch 1, bei der die Führungsmittel (8) mindestens eine fest mit der Führungsnuss (7) verbundene Rolle umfassen, die in einer Nut (9) rollt.

5. Vorrichtung nach Anspruch 1, bei der die Führungsmittel einen Wagen mit Rollen (8) umfassen, die jeweils in einer dazugehörigen Nut (9) rollen, wobei das Kopplungselement den Wagen mit dem angetriebenen Element (4) über eine Gleitverbindung (5) mit einer zur Achse der Rollen (8) orthogonalen Achse verbindet.

6. Vorrichtung nach Anspruch 5, bei der sich die beiden Nuten (9) zu beiden Seiten des Wagens mit Rollen befinden.

7. Vorrichtung nach Anspruch 5, bei der sich die beiden Nuten (9) auf einer selben Seite des Wagens mit Rollen befinden.

8. Schraubenwinde, umfassend eine Schraube (4), die entlang ihrer Längsachse mittels einer Antriebsmutter (3) angetrieben wird, wobei die angetriebene Schraube (4) mit einer Antirotationsvorrichtung gemäß einem der vorhergehenden Ansprüche verbunden ist.

9. Kabelwinde, umfassend eine Schraubenwinde nach Anspruch 8, deren angetriebene Schraube (4) fest mit dem Kabel (11) verbunden ist.

10. Kabelwinde nach Anspruch 9, bei der die angetriebene Schraube (4) eine Hohlschraube ist, wobei das Kabel (11) fest mit der Schraube (4) verbunden ist und durch diese hindurchgeht.

## Claims

1. An anti-rotation device of an element (4) driven about a longitudinal axis (Ox) while enabling the driven element to move freely along this axis, the device comprising:
- a yoke (7) guided flat along a longitudinal plane parallel to the longitudinal axis of the screw using guiding means (8) that prevent the guide yoke (7) from rotating about the longitudinal axis and that enable the guide yoke (7) to rotate about two axes perpendicular to the longitudinal axis and perpendicular to one another;
- a coupling member (6) yo one extremity of the driven element (4), the coupling member (6) being linked to the guide yoke (7) using linking means that enable a sliding link (5) along a sliding axis substantially perpendicular to the longitudinal axis
**characterized in that** the sliding axis (5) does not intersect with the longitudinal axis.

2. The device as claimed in claim 1, in which the linking means enable rotation about the sliding axis.

3. The device as claimed in claim 1, in which the linking means include a splined recirculating-ball shaft (5).

4. The device as claimed in claim 1, in which the guide means (8) include at least one roller rigidly attached to the guide yoke (7) and running in a slot (9).

5. The device as claimed in claim 1, in which the guide means include a trolley with rollers (8) each running in a related slot (9), the coupling member linking the trolley to the driven element (4) by means of a sliding link (5) the axis of which is orthogonal to the axis of the rollers (8).

6. The device as claimed in claim 5, in which the two slots (9) are located on either side of the roller trolley.

7. The device as claimed in claim 5, in which the two slots (9) are located on the same side of the roller trolley.

8. A screw jack including a screw (4) driven along the longitudinal axis thereof by means of a driving nut (3), the driven screw (4) being associated with an anti-rotation device as claimed in one of the preceding claims.

9. A cable jack including a screw jack as claimed in claim 8, in which the driven screw (4) is rigidly connected to the cable (11).

10. A cable jack according to claim 9, in which the driven screw (4) is a hollow screw, the cable (11) being rigidly connected to the driven screw (4) and passing therethrough.
